# FASCICULE DE BREVET EUROPEEN

(11) **EP 3 593 966 B1**
(45) Date de publication et mention de la délivrance du brevet: **13.01.2021**
(21) Numéro de dépôt: 19185240.9
(22) Date de dépôt: 09.07.2019
(51) Int. Cl.: B26D 7/24, B26D 7/06, B26D 5/00, B26D 1/11

(54) **TRANCHEUSE À PAIN AUTOMATIQUE**
AUTOMATISCHE BROTSCHNEIDEMASCHINE
AUTOMATIC BREAD SLICER

(30) Priorité: 09.07.2018 BE 201805483
(43) Date de publication de la demande: 15.01.2020
(73) Titulaire: JAC S.A., 4000 Liège (BE)
(72) Inventeur: Van Cauwenberghe, Baudouin, 4000 Liège (BE)
(74) Mandataire: Callewaert, Koen

(56) Documents cités:
- EP-A1- 2 039 483
- EP-A2- 1 647 374
- US-A1- 2010 215 789

## Description

L'invention concerne une trancheuse à pain, en particulier un dispositif pour couper un pain en tranches avec un compartiment de chargement adjacent à un ensemble de lames comprenant des lames oblongues parallèles pouvant être entraînées suivant un mouvement de va-et-vient suivant leur direction longitudinale. Un poussoir mobile est prévu dans le compartiment de chargement. Ce poussoir peut être déplacé entre une position reculée par rapport à l'ensemble de lames et une position fin de coupe. Ainsi, le poussoir permet de pousser un pain à travers l'ensemble de lames pour couper le pain en tranches lorsque les lames sont entraînées. Le compartiment de chargement est accessible par une ouverture d'accès pour poser un pain à couper dans le compartiment de chargement entre l'ensemble de lames et le poussoir lorsque ce dernier est dans la position reculée. La trancheuse comprend des moyens de détection pour détecter la présence d'un objet dans l'ouverture de chargement. Ces moyens de détection coopèrent avec l'entrainement de l'ensemble de lames pour arrêter le mouvement des lames lorsque la présence d'un objet dans l'ouverture d'accès est détectée par les moyens de détection pendant que les lames sont entraînées suivant un mouvement de va-et-vient.

Ces trancheuses sont surtout utilisées dans des magasins où un client choisit un pain et le dépose dans un compartiment de chargement de la trancheuse afin de trancher le pain. L'ensemble de lames constitue une paroi de ce compartiment qui est accessible par une ouverture d'accès ouverte. Ainsi, l'on prévoit des moyens de détections par lesquels il est assuré que le mouvement des lames est arrêté lorsque un objet, comme la main d'une personne, est détecté dans l'ouverture d'accès.

Dans d'autres trancheuses, suivant l'art antérieur, un couvercle est prévu qui ferme l'ouverture d'accès pendant qu'un pain est coupé. Pour des raisons de sécurité, le couvercle ne puisse pas être ouvert avant que la découpe du pain soit terminé ou le mouvement des lames est immédiatement arrêté lorsqu'on ouvre le couvercle.

L'avantage des trancheuses pourvues d'une ouverture d'accès sans couvercle est que moins de manipulations sont requises pour couper un pain et que la découpe d'un pain prend donc moins de temps par rapport à une trancheuse avec couvercle.

Le but de l'invention est, par conséquent, de proposer un dispositif pour couper automatiquement un pain qui nécessite moins de manipulations et qui permet donc de couper un plus grand nombre de pains par unité de temps.

A cet effet, les moyens de détection coopèrent avec l'entrainement de l'ensemble de lames et avec l'entrainement du poussoir de manière à ce que, lorsque la présence d'un objet dans l'ouverture d'accès est détecté par les moyens de détection pendant que le poussoir est dans la position reculée, le mouvement des lames est déclenché et le poussoir est déplacé de sa position reculée vers la position fin de coupe après que l'objet n'est plus détecté dans l'ouverture d'accès par les moyens de détection.

Avantageusement, les moyens de détection permettent de générer au moins un faisceau électromagnétique s'étendant dans le plan de l'ouverture d'accès, ou en regard de cet ouverture, les moyens de détection comprenant au moins un capteur optique pour détecter l'interruption du faisceau lorsqu'un objet est dans l'ouverture d'accès.

De préférence, les moyens de détection comprennent un émetteur et un récepteur, l'émetteur présentant une source lumineuse pour générer au moins un faisceau lumineux qui traverse l'ouverture d'accès vers le récepteur. La présence d'un objet dans l'ouverture d'accès est alors détectée lorsque le faisceau lumineux n'atteint pas le récepteur.

Suivant une forme de réalisation intéressante du dispositif, suivant l'invention, les moyens de détection présentent un rideau lumineux formé par des faisceaux lumineux traversant l'ouverture d'accès et s'étendant, de préférence, parallèlement les uns aux autres.

L'invention concerne également un procédé pour couper automatiquement un pain en tranches avec une trancheuse de pain présentant un compartiment de chargement adjacent à un ensemble de lames comprenant des lames oblongues parallèles. La trancheuse présente un poussoir dans le compartiment de chargement qui est mobile entre une position reculée par rapport à l'ensemble de lames et une position fin de coupe et qui permet de pousser un pain à travers l'ensemble de lames pendant que les lames sont entraînés suivant un mouvement de va-et-vient suivant leur direction longitudinale.

Ce procédé est caractérisé en ce que l'on détecte la présence d'un objet dans l'ouverture d'accès et lorsqu'un objet est détecté pendant que les lames sont immobiles et le poussoir est dans sa position reculée, le mouvement des lames et le mouvement du poussoir vers la position fin de coupe est enclenché pour couper un pain en tranches dès que la présence de l'objet dans l'ouverture n'est plus détectée.

D'autres détails et particularités de l'invention ressortiront de la description donnée ci-après, à titre d'exemple non limitatif, de quelques formes de réalisation particulières du dispositif et du procédé, suivant l'invention, avec référence aux dessins annexés.
La figure 1 est une vue schématique en perspective d'une trancheuse suivant l'invention présentant une ouverture d'accès ouverte..
La figure 2 est une coupe transversale suivant la ligne I-I de la figure 1 présentant le poussoir dans la position reculée.
La figure 3 est une coupe transversale suivant la ligne I-I de la figure 1 présentant le poussoir dans la position fin de coupe.

Dans les différentes figures, les mêmes chiffres de référence concernent des éléments analogues ou identiques.

Le dispositif, suivant l'invention, comme représenté dans les figures, constitue une trancheuse de pain comprenant un bâti 1 avec un compartiment de chargement 2. Un pain 3 à couper en tranches est introduit dans le compartiment de chargement 2 et est déplacé au moyens d'un poussoir 4 à travers un ensemble de lames 5 vers un espace de réception 6. L'ensemble de lames 5 est adjacent au compartiment de chargement 2 et fait partie d'une paroi de ce compartiment 2. Lors de son déplacement à travers l'ensemble de lames 5 le pain 3 est coupé en tranches. L'ensemble de lames 5 comprend généralement des lames oblongues 7 arrangées parallèlement les unes aux autres qui peuvent subir un mouvement de va-et-vient suivant leur direction longitudinale.

Le compartiment de chargement 2 présente une base 8 inclinée sensiblement plane sur laquelle un pain 3 peut être placé pour être coupé en tranches. Le pain 3 est introduit dans le compartiment de chargement 2 à travers une ouverture d'accès 9.

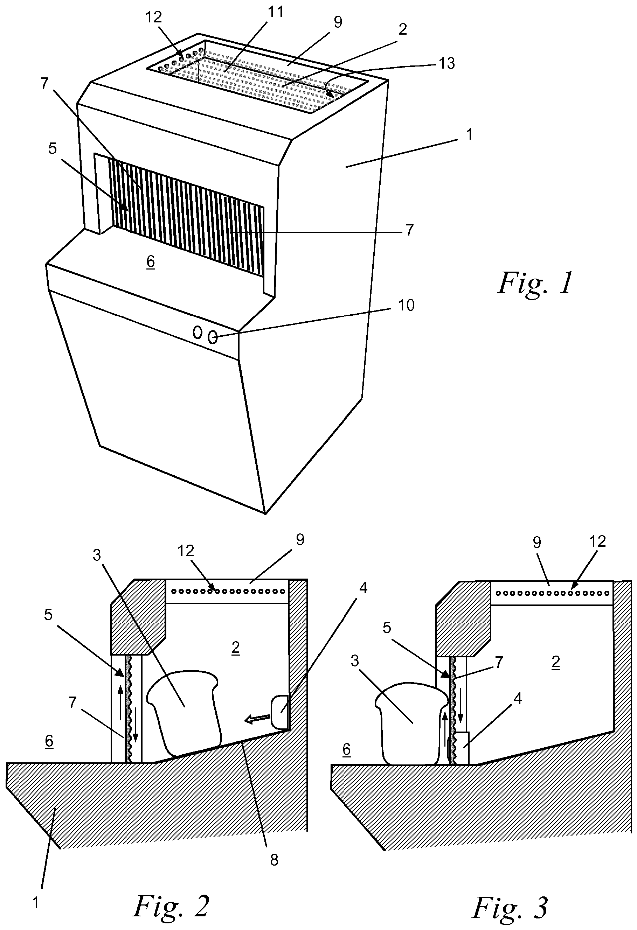

Le poussoir 4 est prévu dans le compartiment de chargement 2 et est mobile entre une position reculée par rapport à l'ensemble de lames 5, comme montrée dans la figure 2, et une position fin de coupe qui est illustrée dans la figure 3. Dans la position reculée, le poussoir 4 est adjacent à la paroi du compartiment de chargement 2 opposé à l'ensemble de lames 5.

Pour permettre de couper le pain, il est important qu'il est posé entre l'ensemble de lames 5 et le poussoir 4. Après qu'un pain 3 à couper est mis entre le poussoir 4, qui est dans la position reculée, et l'ensemble de lames 5, on pousse sur un bouton 10 afin de faire démarrer la coupe du pain 3. Le pain 3 est alors avancé par le poussoir 4 vers l'ensemble de lames 5 et par l'action du poussoir 4, le pain 3 est déplacé à travers l'ensemble de lames 5 dont les lames subissent un mouvement de va-et-vient en formant ainsi les tranches du pain 3. Lorsque le pain a traversé complètement l'ensemble de lames 5, le poussoir 4 est dans la position fin de coupe, comme montrée dans la figure 3, et le pain coupé peut être récupéré de l'espace de réception 6.

A la fin de la découpe du pain 3, lorsque celui-ci a traversé complètement l'ensemble de lames 5, le poussoir 4 est retourné de la position fin de coupe vers la position reculée et le mouvement des lames 7 est arrêté.

Etant donné que l'ouverture d'accès 9 reste ouverte en permanence et, en particulier, lors du mouvement des lames 7 pour couper un pain, un système de sécurité est prévu pour assurer que le mouvement des lames 7 et le déplacement du poussoir 4 sont arrêtés immédiatement lorsqu'une personne introduit un objet, comme par exemple une main, dans le compartiment de chargement 2.

Ce système de sécurité comprend des moyens de détection pour détecter la présence d'un objet dans l'ouverture de chargement 9. Dès qu'un objet est détecté dans l'ouverture d'accès 9 pendant que les lames 7 sont entraînées suivant un mouvement de va-et-vient, les moyens de détection envoyent un signal à l'entrainement de l'ensemble de lames 5 pour arrêter le mouvement des lames 7. De préférence, le déplacement du poussoir 4 est également arrêté au moment q'un objet est détecté dans l'ouverture d'accès 9. Ainsi, il est assuré qu'il n'est pas possible de contacter les lames 7 oscillantes avec la main à travers l'ouverture d'accès 9.

Après que l'objet a été enlevé de l'ouverture d'accès 9, la trancheuse peut être démarrée en appuyant sur le bouton 10 prévu à cet effet.

Les moyens de détection permettent, en particulier, de générer au moins un faisceau électromagnétique 11 s'étendant dans le plan de l'ouverture d'accès 9 ou parallèlement à cette ouverture 9, ou en regard de l'ouverture 9. Lorsque le faisceau est coupé par un objet qui se trouve dans l'ouverture d'accès 9, le mouvement des lames 7 et du poussoir 4 sont arrêtés. Les moyens de détection comprennent, par conséquent, au moins un capteur optique pour détecter l'interruption du faisceau 11 lorsqu'un objet est dans l'ouverture d'accès 9.

Les moyens de détection peuvent comprendre un émetteur 12 et un récepteur 13. L'émetteur présente au moins une source lumineuse pour générer au moins un faisceau lumineux 11 qui traverse l'ouverture 9. La présence d'un objet dans l'ouverture d'accès 9 étant détectée lorsque le faisceau 11 n'atteint pas le récepteur 13.

Les moyens de détection présentent, par exemple, un rideau lumineux formé par des faisceaux lumineux 11 traversant l'ouverture d'accès et s'étendant dans un plan, de préférence, parallèlement les uns aux autres, comme représenté dans la figure 1.

Suivant l'invention, la présence des moyens de détection, en particulier, le rideau lumineux, est également utilisée pour permettre de démarrer automatiquement la découpe d'un pain 3 après qu'il a été déposé dans le compartiment de chargement 2. A cet effet, les moyens de détection coopèrent avec l'entrainement de l'ensemble de lames 5 et avec l'entrainement du poussoir 4.

Après la découpe d'un pain 3, le mouvement des lames 7 est arrêté et le poussoir 4 est retourné vers la position reculée afin de recevoir un nouveau pain 3 à couper. Ce nouveau pain 3 est posé à la main sur la base 8 à travers l'ouverture d'accès 9 de sorte que les moyens de détection détectent la présence d'un objet dans l'ouverture d'accès 9 jusqu'à ce que la main est retirée du compartiment de chargement 2. Lorsque les moyens de détection ne détectent plus d'objet dans l'ouverture d'accès 9, la découpe du pain 3 est démarrée automatiquement en déplaçant le poussoir 4 vers la position fin de coupe et en entrainant les lames 7 suivant un mouvement de va-et-vient.

Donc, suivant l'invention, les moyens de détection coopèrent avec l'entrainement de l'ensemble de lames 5 et avec l'entrainement du poussoir 4 de manière à ce que, lorsque la présence d'un objet dans l'ouverture d'accès 9 est détecté par les moyens de détection pendant que le poussoir 4 est dans la position reculée, le mouvement des lames 7 est déclenché et le poussoir 4 est déplacé de sa position reculée vers la position fin de coupe après que l'objet n'est plus détecté dans l'ouverture d'accès 9 par le les moyens de détection.

Ainsi, il n'est pas nécessaire de pousser un bouton ou d'entreprendre une autre manipulation après que le pain 3 a été posé dans le compartiment de chargement 2 pour démarrer la découpe du pain 3.

De préférence, les moyens de détection coopèrent également avec un capteur de position pour détecter la présence du poussoir dans la position reculée. Ce capteur permet donc de vérifier que le poussoir 4 est dans la position reculée avant d'entraîner les lames 7 et de faire avancer le poussoir vers la position fin de coupe.

L'invention n'est bien entendu pas limitée aux formes de réalisation décrites ci-dessus et représentées aux figures annexées, mais bien d'autres variantes pourraient être envisagées sans sortir du cadre de l'invention.

Ainsi, il n'est pas nécessaire que les moyens de détection comprennent un ou plusieurs faisceaux lumineux, mais d'autres manières peuvent être envisagées pour détecter la présence d'un objet dans l'ouverture d'accès.

## Revendications

1. Dispositif pour couper un pain (3) en tranches avec un compartiment de chargement (2) adjacent à un ensemble de lames (5) comprenant des lames (7) oblongues parallèles pouvant être entraînées suivant un mouvement de va-et-vient suivant leur direction longitudinale, dans laquelle un poussoir (4) est prévu dans le compartiment de chargement (2), ce poussoir (4) étant mobile entre une position reculée par rapport à l'ensemble de lames (5) et une position fin de coupe et permettant de pousser un pain (3) à travers l'ensemble de lames (5), le compartiment de chargement (2) étant accessible par une ouverture d'accès (9) pour poser un pain (3) à couper dans le compartiment de chargement (2) entre l'ensemble de lames (5) et le poussoir (4) lorsque ce dernier est dans la position reculée, ce dispositif comprenant des moyens de détection pour détecter la présence d'un objet dans l'ouverture d'accès (9), ces moyens de détection coopérant avec l'entraînement de l'ensemble de lames (5) pour arrêter le mouvement des lames (7) lorsque la présence d'un objet dans l'ouverture d'accès (9) est détectée par les moyens de détection pendant que les lames (7) sont entraînées suivant un mouvement de va-et-vient,
**caractérisé en ce que** les moyens de détection coopèrent avec l'entraînement de l'ensemble de lames (5) et avec l'entraînement du poussoir (4) de manière à ce que, lorsque la présence d'un objet dans l'ouverture d'accès (9) est détectée par les moyens de détection pendant que le poussoir (4) est dans la position reculée, le mouvement des lames (7) est déclenché et le poussoir (4) est déplacé de sa position reculée vers la position fin de coupe après que l'objet n'est plus détecté dans l'ouverture d'accès (9) par les moyens de détection.

2. Dispositif suivant la revendication 1, dans lequel les moyens de détection permettent de générer au moins un faisceau électromagnétique (11) s'étendant dans l'ouverture d'accès (9), ou en regard de cette ouverture (9), les moyens de détection comprenant au moins un capteur optique pour détecter l'interruption du faisceau (11) lorsqu'un objet est dans l'ouverture d'accès (9).

3. Dispositif suivant la revendication 1 ou 2, dans lequel les moyens de détection comprennent un émetteur (12) et un récepteur (13), l'émetteur (12) présentant une source lumineuse pour générer au moins un faisceau lumineux (11) qui
traverse l'ouverture d'accès (9) vers le récepteur (13), la présence d'un objet dans l'ouverture d'accès (9) étant détectée lorsque le faisceau (11) n'atteint pas le récepteur (13).

4. Dispositif suivant l'une quelconque des revendications 1 à 3, dans lequel les moyens de détection présentent un rideau lumineux formé par des faisceaux lumineux (11) traversant l'ouverture d'accès (9) et s'étendant, de préférence, parallèlement les uns aux autres.

5. Dispositif suivant l'une quelconque des revendications 1 à 4, comprenant un capteur de position pour détecter la présence du poussoir (4) dans la position reculée.

6. Dispositif suivant l'une quelconque des revendications 1 à 5, dans lequel le compartiment de chargement (2) comprend une base (8) qui est inclinée vers l'ensemble de lames (5) de manière à faciliter le déplacement d'un pain (3) posé sur la base (8) vers l'ensemble de lames (5).

7. Dispositif suivant l'une quelconque des revendications 1 à 6, dans lequel les moyens de détection comprennent au moins une cellule photoélectrique.

8. Procédé pour couper automatiquement un pain (3) en tranches avec une trancheuse de pain présentant un compartiment de chargement (2) adjacent à un ensemble de lames (5) comprenant des lames (7) oblongues parallèles, dans laquelle un poussoir (4) est prévu dans le compartiment de chargement (2), ce poussoir (4) étant mobile entre une position reculée par rapport à l'ensemble de lames (5) et une position fin de coupe et permettant de pousser un pain (3) à travers l'ensemble de lames (5) par le déplacement du poussoir (4) de la position reculée vers la position fin de coupe pendant que les lames (7) sont entraînés suivant un mouvement de va-et-vient suivant leur direction longitudinale, le compartiment de chargement (2) étant accessible par une ouverture d'accès (9) pour poser un pain (3) à couper dans le compartiment de chargement (2),
ce procédé étant **caractérisé en ce que** l'on détecte la présence d'un objet dans l'ouverture d'accès (9) et lorsqu'un objet est détecté pendant que les lames (7) sont immobiles et le poussoir (4) est dans sa position reculée, le mouvement des lames (7) et le mouvement du poussoir (4) sont enclenchés pour couper un pain (3) en tranches dès que la présence de l'objet dans l'ouverture (9) n'est plus détectée.

9. Procédé suivant la revendication 8, dans lequel des faisceaux lumineux (11) sont créés qui s'étendent dans l'ouverture d'accès (9) ou en regard de cette ouverture (9) pour constituer un rideau lumineux, la présence d'un objet dans l'ouverture d'accès (9) étant détectée par la détection de l'interruption d'au moins un des faisceaux (11) par l'objet.

10. Procédé suivant la revendication 8 ou 9, dans lequel l'on détecte si le poussoir (4) est dans la position reculée.

## Patentansprüche

1. Vorrichtung zum Schneiden eines Brotes (3) in Scheiben, mit einem Laderaum (2), der an eine Klingenanordnung (5) angrenzt, die längliche parallele Klingen (7) umfasst, die gemäß einer hin- und hergehenden Bewegung entlang ihrer Längsrichtung angetrieben werden können, wobei ein Schieber (4) in dem Laderaum (2) vorgesehen ist, wobei dieser Schieber (4) zwischen einer in Bezug auf die Klingenanordnung (5) zurückgezogenen Position und einer Schneid-Endposition beweglich ist und es ermöglicht, ein Brot (3) durch die Klingenanordnung (5) zu schieben, wobei der Laderaum (2) durch eine Zugangsöffnung (9) zugänglich ist, um ein zu schneidendes Brot (3) im Laderaum (2) zwischen der Klingenanordnung (5) und dem Schieber (4) anzuordnen, wenn sich der Letztgenannte in der zurückgezogenen Position befindet, wobei diese Vorrichtung Detektionsmittel umfasst, um das Vorhandensein eines Objekts in der Zugangsöffnung (9) zu detektieren, wobei diese Detektionsmittel mit dem Antrieb der Klingenanordnung (5) zusammenwirken, um die Bewegung der Klingen (7) zu stoppen, wenn durch die Detektionsmittel das Vorhandensein eines Objekts in der Zugangsöffnung (9) detektiert wird, während die Klingen (7) gemäß einer hin- und hergehenden Bewegung angetrieben werden,
**dadurch gekennzeichnet, dass** die Detektionsmittel derart mit dem Antrieb der Klingenanordnung (5) und mit dem Antrieb des Schiebers (4) zusammenwirken, dass, wenn durch die Detektionsmittel das Vorhandensein eines Objekts in der Zugangsöffnung (9) detektiert wird, während sich der Schieber (4) in der zurückgezogenen Position befindet, die Bewegung der Klingen (7) ausgelöst wird und der Schieber (4) von seiner zurückgezogenen Position zu der Schneid-Endposition verschoben wird, nachdem das Objekt durch die Detektionsmittel nicht mehr in der Zugangsöffnung (9) detektiert wird.

2. Vorrichtung nach Anspruch 1, wobei es die Detektionsmittel ermöglichen, wenigstens einen elektromagnetischen Strahl (11) zu generieren, der sich in der Zugangsöffnung (9) oder gegenüber dieser Öffnung (9) erstreckt, wobei die Detektionsmittel wenigstens einen optischen Sensor umfassen, um die Unterbrechung des Strahls (11) zu detektieren, wenn sich ein Objekt in der Zugangsöffnung (9) befindet.

3. Vorrichtung nach Anspruch 1 oder 2, wobei die Detektionsmittel einen Sender (12) und einen Empfänger (13) umfassen, wobei der Sender (12) eine Lichtquelle zum Generieren wenigstens eines Lichtstrahls (11) umfasst, der die Zugangsöffnung (9) zu dem Empfänger (13) hin durchquert, wobei das Vorhandensein eines Objekts in der Zugangsöffnung (9) detektiert wird, wenn der Strahl (11) den Empfänger (13) nicht erreicht.

4. Vorrichtung nach einem der Ansprüche 1 bis 3, wobei die Detektionsmittel einen Lichtvorhang aufweisen, der durch Lichtstrahlen (11) gebildet wird, die die Zugangsöffnung (9) durchqueren und sich vorzugsweise parallel zueinander erstrecken.

5. Vorrichtung nach einem der Ansprüche 1 bis 4, umfassend einen Positionssensor zum Detektieren des Vorhandenseins des Schiebers (4) in der zurückgezogenen Position.

6. Vorrichtung nach einem der Ansprüche 1 bis 5, wobei der Laderaum (2) eine Basis (8) umfasst, die zu der Klingenanordnung (5) hin geneigt ist, um das Verschieben eines auf der Basis (8) angeordneten Brotes (3) hin zu der Klingenanordnung (5) zu erleichtern.

7. Vorrichtung nach einem der Ansprüche 1 bis 6, wobei die Detektionsmittel wenigstens eine Fotozelle umfassen.

8. Verfahren zum automatischen Schneiden eines Brotes (3) in Scheiben mit einer Brotschneidemaschine, die einen Laderaum (2) aufweist, der an eine Klingenanordnung (5) angrenzt, die längliche parallele Klingen (7) umfasst, wobei ein Schieber (4) in dem Laderaum (2) vorgesehen ist, wobei dieser Schieber (4) zwischen einer in Bezug auf die Klingenanordnung (5) zurückgezogenen Position und einer Schneid-Endposition beweglich ist und es ermöglicht, ein Brot (3) durch die Klingenanordnung (5) zu schieben, indem der Schieber (4) von der zurückgezogenen Position zu der Schneid-Endposition hin verschoben wird, während die Klingen (7) gemäß einer hin- und hergehenden Bewegung entlang ihrer Längsrichtung angetrieben werden, wobei der Laderaum (2) durch eine Zugangsöffnung (9) zugänglich ist, um ein zu schneidendes Brot (3) in dem Laderaum (2) anzuordnen,
wobei dieses Verfahren **dadurch gekennzeichnet ist, dass** das Vorhandensein eines Objekts in der Zugangsöffnung (9) detektiert wird, und wenn ein Objekt detektiert wird, während sich die Klingen (7) nicht bewegen und sich der Schieber (4) in seiner zurückgezogenen Position befindet, die Bewegung der Klingen (7) und die Bewegung des Schiebers (4) ausgelöst werden, um ein Brot (3) in Scheiben zu schneiden, sobald das Vorhandensein des Objekts in der Öffnung (9) nicht mehr detektiert wird.

9. Verfahren nach Anspruch 8, wobei Lichtstrahlen (11) erzeugt werden, die sich in der Zugangsöffnung (9) oder gegenüber dieser Öffnung (9) erstrecken, um einen Lichtvorhang zu bilden, wobei das Vorhandensein eines Objekts in der Zugangsöffnung (9) durch die Detektion der Unterbrechung von wenigstens einem der Strahlen (11) durch das Objekt detektiert wird.

10. Verfahren nach Anspruch 8 oder 9, wobei detektiert wird, ob sich der Schieber (4) in der zurückgezogenen Position befindet.

## Claims

1. Device for cutting a loaf of bread (3) into slices having an input compartment (2) adjacent to a set of blades (5) comprising parallel oblong blades (7) which can be driven in a back-and-forth movement in their longitudinal direction, wherein a pusher (4) is provided in the input compartment (2), which pusher (4) is movable between a retracted position with respect to the set of blades (5) and an end-of-cut position and which allows to push a loaf of bread (3) through the set of blades (5), the input compartment (2) being accessible through an access opening (9) for placing a loaf of bread (3) to be cut in the input compartment (2) between the set of blades (5) and the pusher (4) when the latter is in the retracted position, the device comprising detection means for detecting the presence of an object in the access opening (9), wherein these detection means cooperate with the drive of the set of blades (5) to stop the movement of the blades (7) when the presence of an object in the access opening (9) is detected by the detection means while the blades (7) are being driven in a back-and-forth movement,
**characterised in that** the detection means cooperate with the drive of the set of blades (5) and with the drive of the pusher (4) in such a way that, when the presence of an object in the access opening (9) is detected by the detection means while the pusher (4) is in the retracted position, the movement of the blades (7) is triggered and the pusher (4) is moved from its retracted position to the end-of-cut position once the object is no longer detected in the access opening (9) by the detection means.

2. Device according to claim 1, wherein the detection means make it possible to generate at least one electromagnetic beam (11) extending in the access opening (9), or opposite this opening (9), the detection means comprising at least one optical sensor for detecting the interruption of the beam (11) when there is an object in the access opening (9).

3. Device according to claim 1 or 2, wherein the detection means comprise a transmitter (12) and a receiver (13), the transmitter (12) having a light source for generating at least one light beam (11) which passes through the access opening (9) to the receiver (13), the presence of an object in the access opening (9) being detected when the beam (11) does not reach the receiver (13).

4. Device according to any one of claims 1 to 3, wherein the detection means have a light curtain formed by light beams (11) passing through the access opening (9) and preferably extending parallel to one another.

5. Device according to any one of claims 1 to 4, comprising a position sensor for detecting the presence of the pusher (4) in the retracted position.

6. Device according to any one of claims 1 to 5, wherein the input compartment (2) comprises a base (8) which is inclined towards the set of blades (5) so as to facilitate the movement of a loaf of bread (3) placed on the base (8) towards the set of blades (5).

7. Device according to any one of claims 1 to 6, wherein the detection means comprise at least one photoelectric cell.

8. Method for automatically cutting a loaf of bread (3) into slices with a bread slicer having an input compartment (2) adjacent to a set of blades (5) comprising oblong parallel blades (7), wherein a pusher (4) is provided in the input compartment (2), this pusher (4) being movable between a retracted position with respect to the set of blades (5) and an end-of-cut position and which allows to push a loaf of bread (3) through the set of blades (5) by moving the pusher (4) from the retracted position to the end-of-cut position while the blades (7) are being driven according to a back-and-forth movement in their longitudinal direction, the input compartment (2) being accessible through an access opening (9) for placing a loaf of bread (3) to be cut in the input compartment (2),
this method being **characterised in that** when the presence of an object in the access opening (9) is detected and when an object is detected while the blades (7) are stationary and the pusher (4) is in its retracted position, the movement of the blades (7) and the movement of the pusher (4) are triggered to cut a loaf of bread (3) in slices as soon as the presence of the object in the opening (9) is no longer detected.

9. Method according to claim 8, wherein light beams (11) are created which extend into the access opening (9) or opposite this opening (9) to form a light curtain, the presence of an object in the access opening (9) being detected by detecting the interruption of at least one of the beams (11) by the object.

10. Method according to claim 8 or 9, wherein it is detected whether the pusher (4) is in the retracted position.
